# EUROPEAN PATENT APPLICATION

(11) **EP 4 717 527 A1**
(43) Date of publication of application: **01.04.2026**
(21) Application number: 25205754.2
(22) Date of filing: 30.09.2025
(51) Int. Cl.: B60R 16/023, B60R 21/013, B60R 21/0132, G07C 5/00, G07C 5/08, G06Q 40/08

(54) **METHODS AND SYSTEMS FOR USING CURRENT AND HISTORICAL DRIVING DATA TO DETECT CRASHES**

(30) Priority: 30.09.2024 US 202418902327
(71) Applicant: Cambridge Mobile Telematics Inc., Cambridge, MA 02142 (US)
(72) Inventor: Balakrishnan, Hari, Cambridge, 02142 (US)
(74) Representative: Mewburn Ellis LLP

(57) **Abstract**

Techniques for using current and historical driving data to detect crashes are provided. In some examples, a crash detection application executing on a computing device receives movement measurements indicating motion of the device during a drive in a vehicle from a sensor arrangement coupled to the device and the application analyzes the movement measurements to detect motion of the vehicle. The application receives crash detection criteria from a crash detection management server system that were generated using a historical driving performance of the vehicle, of a driver associated with the computing device, or both. By applying the crash detection criteria to the motion of the vehicle, the application determines that the vehicle was involved in a crash.

## Description

### BACKGROUND

Mobile devices have an assortment of sensors available to detect various aspects of mobile device movement. Some conventional systems have been developed to track driving conditions including speed, braking, and turn speed. Such systems include external devices that have been physically integrated with vehicles to track driving behavior. However, little has been done to help drivers and other interested parties predict, detect, and reconstruct vehicle accidents (also referred to herein as "crashes" or "collisions").

### SUMMARY

Embodiments of the present invention generally relate to using current and historical driving data to detect crashes. In some embodiments, a method is provided. The method may comprise receiving, by a crash detection application executing on a computing device, and from a sensor arrangement coupled to the computing device, movement measurements indicating motion of the computing device during a drive in a vehicle. The method may further comprise analyzing, by the crash detection application, the movement measurements to detect motion of the vehicle. The method may further comprise receiving, by the crash detection application, and from a crash detection management server system, crash detection criteria generated using a historical driving performance of the vehicle, of a driver associated with the computing device, or both. The method may further comprise determining, by the crash detection application, that the vehicle was involved in a crash during the drive by applying the crash detection criteria to the motion of the vehicle.

The method may further comprise receiving previous movement measurements collected by the sensor arrangement during a plurality of drives that occurred before the drive. The method may further comprise analyzing the previous movement measurements to detect occurrences of one or more types of driving events during each of the plurality of drives. The method may further comprise generating a historical driver score based on the occurrences of the one or more types of driving events detected during the plurality of drives.

In some embodiments, the historical driving performance comprises the historical driver score. In some embodiments, generating the historical driver score comprises: generating drive scores for each drive of the plurality of drives based on the occurrences of the one or more types of driving events detected during each drive; and aggregating a subset of the drive scores from a predefined number of most recent drives. In some embodiments, generating a drive score for a respective drive of the plurality of drives comprises: generating an event score for each type of the one or more types of driving events based on a number of occurrences of each type detected during the respective drive; and aggregating the event score for each type of the one or more types of driving events.

The method may further comprise generating the crash detection criteria from collections of vehicle motion training data, wherein each collection of vehicle motion training data comprises vehicle motion data collected by another computing device during a crash involving a respective vehicle or a respective driver having a same historical driving performance as the historical driving performance of the vehicle, of the driver, or of both.

In some embodiments, the crash detection criteria include a machine learning model and determining that the vehicle was involved in the crash comprises executing, by the crash detection application, the machine learning model on the motion of the vehicle during the subsequent drive to produce a crash classification. In some embodiments, applying the crash detection criteria to the motion of the vehicle comprises: analyzing, by the crash detection application, the motion of the vehicle to generate one or more outputs indicative of a potential crash. In some embodiments, applying the crash detection criteria to the motion of the vehicle comprises comparing, by the crash detection application, the crash detection criteria with the one or more outputs.

In some embodiments, the crash detection criteria include a predefined crash detection threshold and determining that the vehicle was involved in the crash comprises: analyzing, by the crash detection application, the motion of the vehicle to generate a likelihood that the vehicle was involved in the crash; and determining, by the crash detection application, that the likelihood exceeds the predefined crash detection threshold. In some embodiments, the one or more types of driving events include at least one of: hard braking events, hard acceleration events, distracted driving events, road type events, or time of day events. In some embodiments, the sensor arrangement includes at least one of an accelerometer, a gyroscope, a magnetometer, a compass, a barometer, or a Global Navigation Satellite System (GNSS) receiver.

In some embodiments, determining that the vehicle was involved in a crash comprises determining that the crash occurred at a first time. In some embodiments, the method further comprises: identifying, by the crash detection application, a subset of the movement measurements that were collected by the sensor arrangement within predefined time period before the first time, after the first time, or both; and transmitting, by the crash detection application, the subset of the movement measurements to the crash detection management server system in response to determining that the vehicle was involved in the crash. In some embodiments, the crash detection criteria are first crash detection criteria and the method further comprises applying, by the crash detection management server system, second crash detection criteria to the subset of the movement measurements to verify the occurrence of the crash. In some embodiments, the computing device is a smartphone disposed within the vehicle. In some embodiments, the computing device is an integrated component of the vehicle.

In some embodiments, a crash detection system is provided. The crash detection system may comprise a computing device and a crash detection management server system. The computing device may comprise one or more first processors and a first memory storing a first set of instructions which, when executed by the one or more first processors, cause the one or more first processors to perform first operations comprising receiving, from a sensor arrangement coupled to the computing device, movement measurements indicating motion of the computing device during a drive in a vehicle. The first operations may further comprise analyzing the movement measurements to detect motion of the vehicle. The first operations may further comprise receiving, from a crash detection management server system, first crash detection criteria generated using a historical driving performance of the vehicle, of a driver associated with the computing device, or both. The first operations may further comprise determining that the motion of the vehicle satisfies the first crash detection criteria. The first operations may further comprise transmitting the movement measurements to the crash detection management server system in response to determining that the motion of the vehicle satisfies the first crash detection criteria. The crash detection management server system may comprise one or more second processors and a second memory storing a second set of instructions which, when executed by the one or more second processors, cause the one or more second processors to perform second operations comprising transmitting the first crash detection criteria to the computing device. The second operations may further comprise receiving the movement measurements from the computing device. The second operations may further comprise determining that the vehicle was involved in a crash during the drive by applying second crash detection criteria to the movement measurements, the second crash detection criteria being different than the first crash detection criteria.

In some embodiments, the second operations further comprise generating the first crash detection criteria from a first collection of vehicle motion training data, wherein the first collection of vehicle motion training data comprises vehicle motion data collected by a second computing device during a crash involving a second vehicle or a second driver. In some embodiments, the second operations further comprise: generating second crash detection criteria from a second collection of vehicle motion training data, wherein the second collection of vehicle motion training data comprises vehicle motion data collected by a third computing device during a crash involving a third vehicle or a third driver having a different historical driving performance than the second vehicle or the second driver; and determining that a match exists between the historical driving performance of the second vehicle, of the second driver, or of both, and the historical driving performance of the vehicle, of the driver, or of both. In some embodiments, the first crash detection criteria are transmitted to the computing device in response to determining that the match exists.

In some embodiments, the first crash detection criteria include a machine learning model, and determining that the motion of the vehicle satisfies the first crash detection criteria comprises executing the machine learning model on the motion of the vehicle during the subsequent drive to produce a crash classification. In some embodiments, the first crash detection criteria include a predefined crash detection threshold and determining that the motion of the vehicle satisfies the first crash detection criteria comprises determining that one or more of the movement measurements exceeds the predefined crash detection threshold.

In some embodiments, a non-transitory machine-readable storage medium, including instructions, is provided. The instructions, when executed by one or more processors of a crash detection system, may cause the one or more processors to perform operations comprising receiving, by a crash detection application executing on a computing device, and from a sensor arrangement coupled to the computing device, movement measurements indicating motion of the computing device during a drive in a vehicle. The operations may further comprise analyzing, by the crash detection application, the movement measurements to detect motion of the vehicle. The operations may further comprise receiving, by the crash detection application, and from a crash detection management server system, crash detection criteria generated using a historical driving performance of the vehicle, of a driver associated with the computing device, or both. The operations may further comprise determining, by the crash detection application, that the vehicle was involved in a crash during the drive by applying the crash detection criteria to the motion of the vehicle.

### BRIEF DESCRIPTION OF THE DRAWINGS

Aspects of the present disclosure now will be described more fully hereinafter with reference to the accompanying drawings, which are intended to be read in conjunction with both this summary, the detailed description, and any preferred and/or particular embodiments specifically discussed or otherwise disclosed. The various aspects may, however, be embodied in many different forms and should not be construed as limited to the embodiments as set forth herein; rather, these embodiments are provided by way of illustration only and so that this disclosure will be thorough, complete, and will fully convey the full scope to those skilled in the art.
FIG. 1 is a diagram illustrating a system for transmitting vehicle and sensor data between computing devices for the detection and evaluation of crash events, according to some embodiments.
FIG. 2 is a block diagram illustrating an example system architecture of computing devices for the detection and evaluation of crash events, according to some embodiments.
FIG. 3 is a block diagram illustrating a system for detecting crash events, according to some embodiments.
FIG. 4 is a flow diagram illustrating a process for training and executing a crash detection model according to some embodiments.
FIG. 5 is a flow diagram of an example process for detecting a potential crash, according to some embodiments.
FIG. 6 is a flow diagram of another example process for detecting a potential crash, according to some embodiments.

### DETAILED DESCRIPTION OF SPECIFIC EMBODIMENTS

Embodiments of the present invention utilize mobile devices to provide information on a user's behaviors during transportation. For example, a mobile device carried by a user could be used to analyze driving behavior, which is of interest for a variety of applications.

Mobile devices are increasingly capable including increased storage and operation capacity. Mobile devices are also increasingly equipped with an assortment of sensors available to detect various aspects of mobile device movement. For example, mobile devices, including smart phones, have been utilized to provide location information to users. One example is the use of Global Positioning System (GPS) chip sets, which are now widely available, to produce location information for a mobile device. Some conventional systems have been developed to track driving conditions including speed, braking, and turn speed. Such systems include external devices that have been physically integrated with vehicles to track driving behavior.

Similarly, vehicles' control operations rely on various sensor inputs, and vehicles are typically equipped with a wide variety of sensors to produce the data used by a vehicle's computer controller. The integration of smart device capabilities, including network connectivity over cellular, WiFi, Bluetooth, and even satellite networks, has allowed modem vehicles to function as essentially smart computing devices themselves, capable of performing more advanced computational operations as well as transmitting vehicle sensor data to remote devices.

One of the additional uses for mobile and/or vehicle sensor data can be for crash detection and crash severity evaluation. For example, vehicle drivers typically carry a smartphone with them while operating the vehicle. Smartphones can be equipped with accelerometers that provide device sensor data related to the speed and orientation of the phone and changes thereof. An application running on the smartphone can use the accelerometer data to detect a potential crash, for instance by detecting a rapid change of the speed and orientation of the smartphone. For greater accuracy in detection, the application can obtain additional device sensor data and/or vehicle sensor data to verify the potential crash as a true crash event.

However, utilizing sensor data detected at or around the crash alone may not account for the driving abilities of a particular driver. For example, an experienced driver might understand how to anticipate and react to potential hazards on the road, reducing their likelihood of being involved in an accident. A good driver might be more aware of their surroundings and be better prepared to react to the actions of other drivers or unexpected situations. A bad driver, on the other hand, may lack skill or experience to safely navigate the road. Bad drivers may engage in reckless driving behavior such as speeding, tailgating, or weaving in and out of traffic. Bad driving behaviors significantly increase the risk of accidents by reducing the driver's ability to react to unexpected situations or hazards.

In a scenario where a speeding car is entering one's lane, a good driver may become quickly aware of the situation and understand to brake and avoid a collision. A bad driver on the other hand, might become aware of the situation later because of their speeding or because they are distracted while driving. Although both will ultimately hard brake, the bad driver is significantly more likely to be in an accident. Therefore, if a crash detection model simply considers current sensor data and triggers a hard brake as a potential crash event, the initial determination of whether a crash has occurred may be too generalized. For example, a good driver is more likely to have braked early enough to avoid a collision.

In an effort to detect all actual crash events, previous techniques relied on lower crash detection thresholds that resulted in more false-positive crash detections. In effect, while applying the same threshold to good and bad drivers resulted in increased precision for detecting crashes involving bad drivers, it also resulted in a high recall or a high number of false-positive crash detection for good drivers.

While sensor data leading up to the collision may be helpful, there is a need for improved crash detection that takes driving abilities and/or risk into account. Embodiments described herein address these and other technical problems associated with using mobile device sensor data to detect crashes by considering a user's historical driving data. The historical driving data of a user may be collected over a period of time and can represent the user's driving abilities (e.g., patterns of hard braking events, hard acceleration events, distracted driving events, road type events, and time of day events). Using the historical driving data, a user may be categorized or grouped based on their driving abilities. Considering a user's historical driving data allows for crash detection that is tailored to an individual user and/or group of users. This tailored approach reduces false-positive crash detections for better drivers (i.e., reducing recall) while ensuring that true-positive crash detections for worse drivers (i.e., precision) is maintained.

Crash evaluation can include using state of the art modeling techniques, including physics-based and machine learning models, to analyze vehicle sensor data to determine the severity of any crash. The more sophisticated crash evaluation can also use historical crash frequency data and data about the location of the crash as inputs. The historical crash frequency data may be data about the driving patterns or capabilities of a particular user or group of users. Because the crash evaluation models may require additional computational resources to execute in a reasonable time, the crash evaluation models may be provided on backend servers and/or cloud servers located remotely from the vehicle.

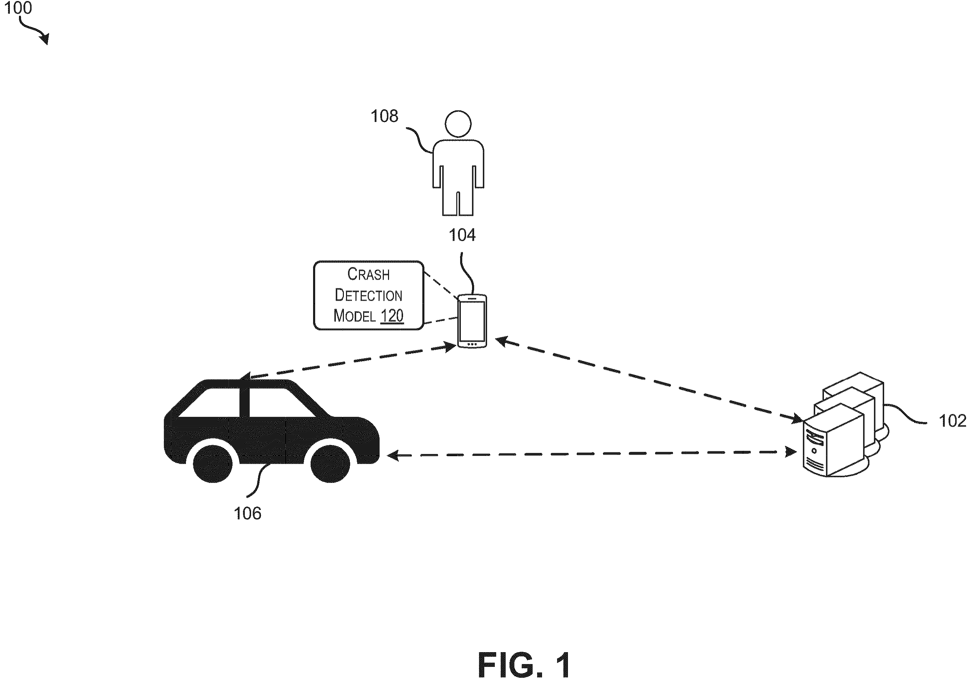

FIG. 1 is a diagram illustrating a system 100 for transmitting vehicle and sensor data between computing devices for the detection and evaluation of crash events, according to some embodiments. The system 100 can include a crash detection management server system 102, a user device 104, a vehicle 106. The crash detection management server system 102 may be a backend server system. The crash detection management server system 102 may be part of a cloud computing system or distributed computing system.

As depicted in FIG. 1, the system 100 can include several network-connected computing devices, including the vehicle 106 that can include sensors and transceivers. Each device may be wholly or partially controlled by different entities. For example, the crash detection management server system 102 may be operated by a service provider of a crash evaluation service and related software applications, while the user device 104 is operated by a user 108, who may be a driver or passenger of the vehicle 106. The vehicle's software may be primarily provided by the manufacturer of the vehicle, with limited ability for the user 108 to modify the software components of the vehicle 106. The user device 104 may be configured to run an application or other software components provided by the crash detection management server system 102. In some examples, the vehicle 106 may include software components provided by the crash detection management server system 102. For example, the vehicle 106 may run an application using a crash detection model to perform some or all of the operations described above for the initial crash detection and verification.

Each of the computing devices of the system 100 may be continuously or intermittently connected to one another using one or more networks and one or more related communication protocols. The networks may include any one or a combination of many different types of networks, such as the Internet, wireless networks, cellular networks, satellite networks and other private and/or public networks. For example, the user device 104 may connect to and communicate with vehicle 106 via Bluetooth or similar short-range wireless networking technology. The crash detection management server system 102 may be in the cloud as part of separate cloud computing systems and may communicate with the user device 104 or the vehicle 106 over the public Internet. The crash detection management server system 102 may communicate with additional server system, such as a third-party server system. The user device 104 can communicate with the crash detection management server system 102 over the public Internet, using a cellular communication standard like 5G or a wireless standard like WiFi. The vehicle 106 may communicate with the crash detection management server system 102 of the user device 104 over a cellular network, wireless network, satellite network, or the like. Because the vehicle data, including vehicle sensor data, may be controlled by the manufacturer of the vehicle 106, in most instances the vehicle 106 may not communicate directly with the crash detection management server system 102. However, embodiments are contemplated in which the vehicle 106 can communicate indirectly with crash detection management server system 102 to transmit vehicle sensor data for use in crash detection and crash evaluation.

The crash detection management server system 102 may maintain an account with a user profile for a user 108 for providing the crash detection, crash evaluation, and related services. User accounts and/or profiles may be created by the crash detection management server system 102 and/or via another service provider such as an automobile insurance provider. An application may be downloaded onto the user device 104 to provide crash detection capabilities while the user 108 operates the vehicle 106. The account may link the user 108 and the vehicle 106 with the application on the user device 104, allowing for the interoperation of the crash detection and crash evaluation operations discussed herein. By maintaining an account, the crash detection management server system 102 can use the crash detection and crash evaluation to provide accurate crash detection for a particular user 108 and reduce the number of falsely detected crashes. The crash detection management server system 102 may maintain driving data for a user 108 to collect historical driving data that may reduce the number of falsely detected crashes.

The user device 104 can be a smartphone, tablet computer, or other computing device. For example, the user device 104 may be a computing device permanently or semi-permanently installed in the vehicle 106, such as an internet-connected (e.g., Internet of Things (IoT)) sensing tag installed on a surface of the vehicle 106, a dashcam system including one or more sensors, storage, and wired/wireless communication capabilities, or the like. The user device 104 can be in the possession of a user 108, of the vehicle 106, or a passenger in the vehicle 106, so that the motion of the user device 104 generally corresponds with the motion of the vehicle 106. The user device 104 can implement a crash detection model 120. Additional details about the different crash detection models are provided further below. The crash detection model 120 can be implemented as part of an application or other software program executing on the user device. For example, the crash detection management server system 102 can provide an application including the crash detection model 120 for user devices to aid in the detection and evaluation of potential crash events as described herein.

In some embodiments, the user device 104 may detect a crash event associated with the vehicle 106. The crash detection model 120 can use device sensors of the user device 104 to detect the crash event. For example, the user device 104 can include one or more accelerometers (e.g., a three-axis micro-electro-mechanical systems (MEMS) sensor) that can measure acceleration of the user device 104 in three dimensions. The data generated by the accelerometer can show whether the user device 104 experiences any rapid acceleration events. For example, a sudden deceleration of the user device 104 may indicate that the vehicle 106 in which the user device 104 is travelling was involved in a potential crash event. Because the motion of the vehicle 106 can include a variety of accelerations and decelerations, the crash detection model 120 may be configured to detect potential crash events based on a threshold of the change in the motion of the user device 104 indicated by the sensor data. In some embodiments, the crash detection model 120 can be configured to obtain device sensor data from the user device 104 for a time period (e.g., one minute, five minutes, etc.) after the initial detection of a potential crash event. For example, the device may remain motionless for a time after the potential crash event, indicating that the potential crash event may have been a true crash. In addition to accelerometers, the user device 104 can have other sensors including, but not limited to, gyroscopes, barometers, microphones, photosensors, cameras, light detection and ranging (LIDAR) sensors or other depth sensors, and global positioning system (GPS) receivers.

In some embodiments, the crash detection model 120 can be configured to obtain vehicle sensor data from the user device 104 or the vehicle 106. The vehicle 106 can include one or more sensors including, but not limited to, cameras, acoustic sensors, LIDAR sensors, inertial measurement units, radar sensors, accelerometers, gyroscopes, GPS receivers, position sensors for engine components (throttle, camshaft), voltage sensors for various points in the vehicle's electrical system, temperature sensors, oxygen sensors, knock sensors, rain sensors, photosensors (e.g., for detecting nearby light sources like oncoming vehicles), driver assistance system status, braking system status, airbag deployment indicators, and vehicle light status. The vehicle 106 can also be configured to communicate over one or more networks using one or more communication standards, including WiFi, Bluetooth, cellular networks (e.g., 5G, 4G long term evolution (LTE), etc.), and the like. In some examples, the vehicle 106 can be configured to communicate over wired networks or other physical connections, for example a data cable connected to the user device 104.

To increase the confidence level for confirming the potential crash, the crash detection model 120 may further consider user data of user 108. The user data may include historical driving data associated with the user 108 and/or vehicle 106. For example, historical driving data can include one or more scores indicating the driving tendencies and/or abilities of a driver. The one or more scores could include an overall score for the driver indicating how safe or unsafe they are as drivers. Additionally, or alternatively, the scores could include overall scores for various driving activities, such as the user's tendency to perform hard braking maneuvers. The overall scores can be based on scores aggregated from multiple discrete drives. A score may indicate an unsafe or safe driver based on previously detected crashes or previously detected driving events (e.g., sudden deceleration). A score may be based on the occurrences of one or more types of driving events during a plurality of drives. A driving event may include, for example, data that the driver suddenly accelerates or brakes a number of times during a plurality of drives. A score may also be generated based on the occurrence of one or more types of driving events detected during a plurality of drives and aggregating a subset of the scores from a number of most recent drives.

Evidence has shown that good drivers are less likely to be involved in crashes than bad drivers. As such, by considering the historical driving data for a driver when classifying events, crash detection model 120 may tailor the detection of crashes to an individual user. For example, the crash detection model 120 may have a higher threshold for crash detection for good drivers to account for the fact that they are less likely to be involved in a crash. Accordingly, crash detection model 120 may reduce the number of false-positive crash determinations.

After detecting a crash event, the user device 104 can send an indication to the crash detection management server system 102. The indication can include the time of the crash event and parameters related to any verification of the crash event that was performed by the user device 104. For example, the indication can include parameters that identify the vehicle, a user account of the user device 104 with the crash detection management server system 102, information about the verification of the crash event (e.g., a confidence level for confirming the potential crash as a true crash). The user device 104 can also transmit the device sensor data to the crash detection management server system 102, including additional device sensor data that was collected after the crash event. The user device 104 can also transmit the vehicle sensor data to the crash detection management server system 102, including additional vehicle sensor data that was collected after the crash event.

The crash detection management server system 102 can be a server system operated by a crash evaluation service provider. The crash detection management server system 102 can include one or more computing devices, including cloud servers and virtual machines (VMs). The crash detection management server system 102 can include one or more software components that enable the crash detection management server system 102 to perform some or all of the functions performed by the user device 104. For example, the crash detection management server system 102 may analyze sensor data from the user device 104 to detect potential crashes and/or verify the accuracy of crashes detected by the user device 104. Additionally, or alternatively, the crash detection management server system 102 may analyze verified crash data and historical driving data for a plurality of drivers to generate and/or modify crash detection models, such as crash detection model 120.

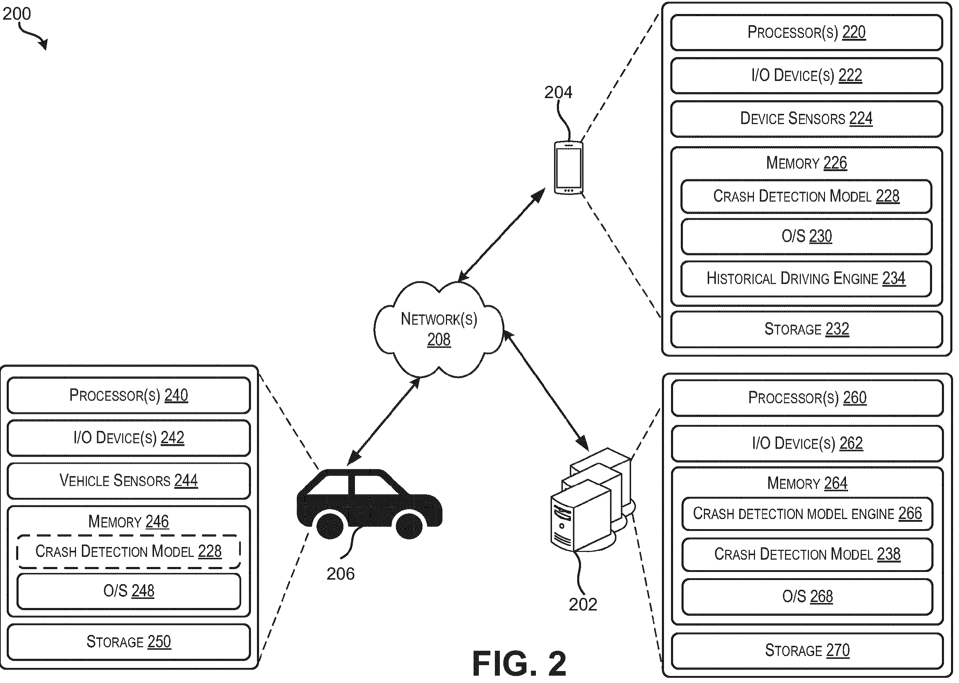

FIG. 2 is a block diagram illustrating an example architecture of a system 200 of computing devices for the detection and evaluation of crash events, according to some embodiments. The system 200 includes a backend server system 202, a user device 204, a vehicle 206, and one or more network(s) 208. The system 200 may be an example of system 100 described above with respect to FIG. 1. The backend server system 202 may be an example of other backend servers described herein, including crash detection management server system 102 of FIG. 1. Similarly, the user device 204 may be an example of user device 104 of FIG. 1, the vehicle 206 may be an example of vehicle 106 of FIG. 1. The network(s) 208 may include any one or a combination of many different types of networks, such as the Internet, wireless networks, cellular networks, and other private and/or public networks.

The user device 204 can have at least one memory 226, one or more processor(s) 220, one or more input/output ("I/O") device(s) 222, and device sensors 224. The processor(s) 220 can include one processing device or multiple processing devices. Non-limiting examples of the processor(s) 220 include Programmable Gate Arrays (FPGAs), application-specific integrated circuits (ASICs), or microprocessors. The processor(s) 220 can execute instructions stored in memory 226 to perform operations. In some examples, the instructions can include processor-specific instructions generated by a compiler or an interpreter from code written in any suitable computer-programming language, such as C, C++, C#, and Java. The I/O device(s) 222 can include displays, monitors, touch screens, a mouse, keyboard, or other I/O devices. The device sensors 224 can include components for acquiring data related to the position, orientation, location, and motion of the user device 204, as well as camera sensors and microphones that may also be included in I/O device(s) 222. Non-limiting examples of device sensors 224 include accelerometers, thermometers, gyroscopes, barometers, microphones, photosensors, cameras, light detection and ranging (LIDAR) sensors or other depth sensors, and global positioning system (GPS) units.

The user device 204 may also include additional storage 232, such as either removable storage or non-removable storage, including, but not limited to, magnetic storage or other solid-state storage. The disk drives and their associated computer-readable media may provide non-volatile storage of computer-readable instructions, data structures, program modules, and other data for the user device 204. In these embodiments, the storage 232 may be utilized to store data generated by the device sensors 224 or received from one or more other devices in system 200.

The memory 226 may include an operating system 230 and one or more application programs, components, or services for implementing the features disclosed herein, including a historical driving engine 234 and a crash detection model 228.

The historical driving engine 234 can assesses the prevalence of driving events (e.g., hard braking, distracted driving, etc.) during a drive to determine one or more behavior scores for the drive, an overall score for the drive, and overall scores for the driver based on multiple drives (i.e., a driver score). The historical driving engine 234 may also detect crashes on its own.

The historical driving engine 234 may generate historical driving data for a user based on data obtained from device sensors 224 while the user is driving a vehicle. The historical driving data may include sensor data collected during one or more prior drives during which the user is actively driving a vehicle. The historical driving data may be based on all prior drives, a predefined number of most recent drives, a random sampling of all prior drives, or the like. The historical driving data may include sensor data detected by the user device sensors 224, the vehicle sensors 244, or any other sensor device capable of transmitting sensor data to the user device 204 and/or backend server system 202. The historical driving data may be raw or processed sensor data and is described in greater detail below.

In some examples, the crash detection model 228 may be executed as part of a larger application hosted on the user device 204 and may be configured to take data from device sensors 224 as inputs to detect a potential crash event. In some examples, the crash detection model 228 may be configured to take additional data from the device sensors 224 as inputs. In some examples, the crash detection model 228 may be configured to take historical data from the historical driving engine 234 as inputs. The crash detection model 228 can take, as inputs, a combination of sensor data and historical data to detect and/or verify a potential crash event as a true crash event, as described further below.

As described above, the vehicle 206 may be considered a "smart" computing device with computing and connectivity capabilities similar to modern smartphones and other user devices. Like the user device 204, the vehicle 206 can have at least one memory 246, one or more processing processor(s) 240, one or more I/O device(s) 242, and vehicle sensors 244. The processor(s) 240 can include one processing device or multiple processing devices. Non-limiting examples of the processor(s) 240 include FPGAs, ASICs, or microprocessors. The processor(s) 240 can execute instructions stored in memory 246 to perform operations. In some examples, the instructions can include processor-specific instructions generated by a compiler or an interpreter from code written in any suitable computer-programming language, such as C, C++, C#, and Java. The processor(s) 240 may also perform operations for the control of the automotive functions of the vehicle 206, including controlling engine performance, operating electronic stability control, antilock braking systems, emission control systems, and the like. In some examples, some of the processor(s) 240 and memory 246 may perform automotive control functions while others of the processor(s) 240 perform operations related to the user interface, for example managing climate control or the media and infotainment system.

The I/O device(s) 242 can include displays, monitors, touch screens, physical knobs, buttons, toggle switches, microphones, speakers, or other I/O devices. The vehicle sensors 244 can include components for acquiring data related to the speed, engine operation, emission control system, braking system, stability control system, as well as camera sensors and acoustic sensors that provide data related to the exterior of the vehicle 206. Non-limiting examples of vehicle sensors 244 include cameras, acoustic sensors, LIDAR sensors, inertial measurement units, radar sensors, accelerometers, gyroscopes, GPS receivers, position sensors for engine components (throttle, camshaft), voltage sensors for various points in the vehicle's electrical system, temperature sensors, oxygen sensors, knock sensors, rain sensors, photosensors (e.g., for detecting nearby light sources like oncoming vehicles), vehicle speed sensors, driver assistance system status, braking system status, airbag deployment indicators, and vehicle light status.

The vehicle 206 may also include additional storage 250, such as either removable storage or non-removable storage, including, but not limited to, magnetic storage or other solid-state storage. The disk drives and their associated computer-readable media may provide non-volatile storage of computer-readable instructions, data structures, program modules, and other data for the vehicle 206. In these embodiments, the storage 250 may be utilized to store data generated by the vehicle sensors 244. As described previously, the vehicle sensors 244 may produce substantial amounts of data, such that it would be computationally wasteful to store all of the vehicle sensor data generated during vehicle trips of more than several minutes in length. Accordingly, the storage 250 may be configured to store a certain amount of vehicle sensor data from the vehicle sensors 244 (e.g., one hour of data, 30 minutes of data, etc.). When vehicle sensor data is to be transmitted to other devices in the system 200 (e.g., when requested by a third-party server system, or when transmitting to backend server system 202 using user device 204 as a networking relay), a portion of the vehicle sensor data stored in storage 250 may be selected and transmitted.

The memory 246 may include an operating system 248 and one or more application programs, components, or services for implementing the features disclosed herein, including, in some embodiments, the crash detection model 228. In these embodiments, all, or a portion of the crash detection model 228 may be executed on the vehicle 206 in combination with or alternatively to the user device 204. As with the user device 204, the crash detection model may be executed as part of a larger application hosted on the vehicle 206 and may be configured to obtain device sensor data from the user device as inputs to detect a potential crash event. In examples in which crash detection is performed by the vehicle 206, the crash detection model 228 may be configured to take data from the vehicle sensors 244 as additional inputs to detect the crash event.

Turning now to the backend server system 202, the backend server system 202 can have at least one memory 264, one or more processor(s) 260 and one or more I/O device(s) 262. The processor(s) 260 can include one processing device or multiple processing devices. Non-limiting examples of the processor(s) 260 include FPGAs, ASICs, or microprocessors. The processor(s) 260 can execute instructions stored in memory 264 to perform operations. In some examples, the instructions can include processor-specific instructions generated by a compiler or an interpreter from code written in any suitable computer-programming language, such as C, C++, C#, and Java. The I/O device(s) 262 can include displays, monitors, touch screens, mouse, keyboard, or other I/O devices.

The backend server system 202 may also include additional storage 270, such as either removable storage or non-removable storage, including, but not limited to, magnetic storage or other solid-state storage. The disk drives and their associated computer-readable media may provide non-volatile storage of computer-readable instructions, data structures, program modules, and other data for the backend server system 202. In these embodiments, the storage 270 may be utilized to store crash detection indications and raw/processed device sensor data from multiple user devices, such as the user device 204, vehicle sensor data from one or more vehicles, such as the vehicle 206, and other data used as inputs for a crash detection model engine, such as crash detection model engine 266, and/or a crash detection model, such as crash detection model 238, including, for example, historical crash frequency information and road network information.

The memory 264 may include an operating system 268 and one or more application programs, components, or services for implementing the features disclosed herein, including the crash detection model engine 266 and the crash detection model 238. In some examples, crash detection model engine 266 takes historical driving data for a plurality of users, including verified crash data, and generates one or more crash detection models, such as crash detection model 238. The crash detection model engine 266 may generate the crash detection model 238 based on, for example, driving data associated with multiple crashes and historical driving data for the respective users involved in each crash. The crash detection model 238 can be a version of the crash detection model 228 described above with respect to the user device 204 and the vehicle 206. The crash detection model 238 may provide a more sophisticated crash detection analysis when executed on the backend server system 202, for example due to potentially greater computing resources and a larger amount of data available at the backend server system 202 as compared to the user device 204 or the vehicle 206. While not illustrated, memory 264 may also include a component configured to perform some or all of the functions as historical driving engine 234 described above. The crash detection model 238 may use historical driving data as inputs for detecting and/or verifying crash events.

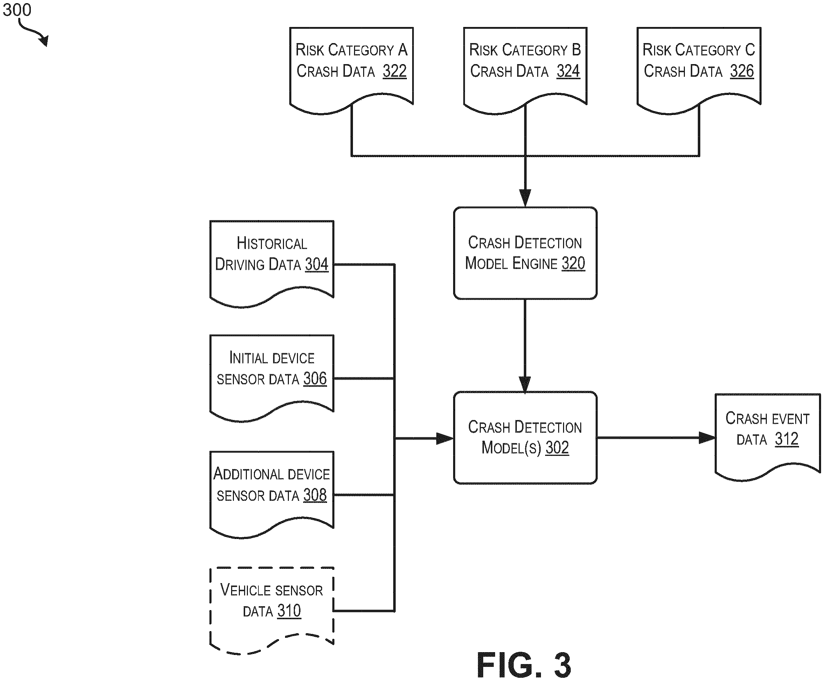

FIG. 3 is a block diagram illustrating a system 300 for detecting crash events, according to some embodiments. As illustrated, system 300 includes a crash detection model 302 and a crash detection model engine 320. The crash detection model 302 may be implemented on a user device, such as user device 204, as part of an application executing on the user device to detect crash events involving a vehicle in which the user device is disposed. Additionally, or alternatively, the crash detection model 302 may be implemented on a backend server system, such as the backend server system 202 described above. In some embodiments, the crash detection model 302 and associated application may execute on a vehicle, such as vehicle 206 as described above. Additionally, or alternatively, one or more computations, processes, and/or analyses performed by the crash detection model 302 may be distributed across a user device, a vehicle, and a backend server.

The crash detection model 302 may be the same, or function in a similar manner as the crash detection model 228, and/or the crash detection model 238 described above. For example, the crash detection model 302 may be executed on data collected from a user device disposed within a vehicle, and/or data collected from the vehicle itself, to detect motion of the user device and/or the vehicle corresponding to a potential crash involving the vehicle. Additionally, or alternatively, the crash detection model 302 may be executed on data for a potential crash to generate a confidence, or otherwise verify, that the potential crash event was in fact a crash involving the vehicle.

The data collected for execution of the crash detection model 302 can include: historical driving data 304; initial device sensor data 306; additional device sensor data 308; and vehicle sensor data 310. The historical driving data 304 may include driving data collected for a user associated with a user device executing the crash detection model 302 and/or one or more users associated with a vehicle as drivers of the vehicle. The historical driving data 304 for a user may include raw sensor data collected by one or more sensors of a user device or vehicle during one or more prior drives during which the user was actively driving a vehicle. Additional detail related to raw sensor data is provided further herein in reference to the initial device sensor data 306, the additional device sensor data 308, and the vehicle sensor data 310.

The historical driving data 304 for a user may further include processed sensor data. Processed sensor data can include identified instances of one or more types of driving events detected by a user device during a drive. Driving events may be detected from raw sensor data. For example, a process executing on a mobile device may monitor accelerometer measurements, gyroscope measurements, magnetometer measurements, global navigation satellite system (GNSS) measurements or the like during a drive to detect instances when the driver has performed one or more maneuvers associated with a type of driving event. As described further herein, the one or more types of driving events can include hard braking events, harsh acceleration events, swerving events, aggressive driving events, hard cornering events, distracted driving events, or the like. An identified instance of a driving event can include information about the type of driving event, a severity of the driving event, a time and location where the driving event occurred, or the like.

In some embodiments, the historical driving data 304 includes the raw and/or processed sensor data from every detected drive during which the user was actively driving a vehicle. Additionally, or alternatively, the historical driving data 304 can include the raw and/or processed sensor data from a subset of the detected drives. For example, the historical driving data 304 may include data from a predefined number of most recent drives. As another example, the historical driving data 304 may include data for all drives that occurred during a predefined amount of time, such as the last week, the last month, the last quarter, or the like. In yet another example, the historical driving data 304 can include data for a predefined number of drives selected at random from all historical drives.

The historical driving data 304 for a user may include one or more driver scores. The one or more driver scores may include evaluations of a user's current and/or historic driving abilities from the user's historic raw and/or processed sensor data. The one or more driver scores may represent an overall evaluation of the user's driving abilities and/or individual evaluations for one or more driving behaviors or tendencies. For example, based on processed sensor data from previous drives, a scoring engine may assess the prevalence of unsafe driving events (e.g., hard braking, distracted driving, etc.) during the previous drives. Based on the prevalence, an overall score for each drive, and/or an overall score for the user based on the scores for each drive may be determined. A driver score may be based on the occurrences of one or more types of driving events detected during a number of drives. The driver score may further be determined by aggregating a subset of the drive scores from a number of most recent drives.

The historical driving data 304 may include raw and/or processed sensor data collected before, during, and/or after one or more previously detected potential crashes. The processed data for previously detected potential crashes can include vehicle speed and lateral and/or longitudinal accelerations experienced by the vehicle before, during, and after the potential crash. The historical driving data 304 may also include other contextual information such as mobile phone use leading up to the detected potential crash, weather, time of day, traffic information, or other similar information that could increase or decrease the likelihood of vehicular accidents.

The initial device sensor data 306 may be data generated by device sensors in a time frame leading up to and/or including the time of a potential crash event. The crash detection model 302 may monitor device sensor data, such as accelerometer, gyroscope, magnetometer, and/or GNSS measurements, to detect one or more measurements indicative of potential crash events. Additionally, or alternatively, another component executing on a user device may monitor device sensor data to detect measurements indicative of a potential crash event and provide an indication of the potential crash event to the crash detection model 302. Measurements indicative of a potential crash event may include raw and/or processed sensor data that exceeds one or more predefined threshold criteria. For example, large spikes in raw accelerometer data and/or extreme changes in a vehicle's estimated speed may indicate that the vehicle experienced a sudden deceleration consistent with a collision.

In response to a potential crash event being detected, the crash detection model 302 can obtain the data generated by the device sensors for a predefined amount of time leading up to the potential crash event. For example, the crash detection model 302 can obtain data generated within 5 seconds, 30 seconds, 1 minute, 5 minutes, or another suitable period of time before the potential crash event as the initial device sensor data 306. The predefined amount of time may be selected to include data that could mitigate or contribute to the likelihood of the potential crash event being an actual crash event.

The additional device sensor data 308 may include data generated by the device sensors in an additional time frame during and/or after the potential crash event. In response to a potential crash event being detected, the crash detection model 302 may continue to obtain raw and/or processed sensor data for a predefined amount of time after the potential crash event. For example, the crash detection model 302 can obtain data generated within 5 seconds, 30 seconds, 1 minute, 5 minutes, or another suitable period of time after the potential crash event as the additional device sensor data 308. The predefined amount of time after the potential crash event may be selected to include data that could mitigate or contribute to the likelihood of the potential crash event being an actual crash event. For example, the additional device sensor data 308 can include raw and/or processed sensor data indicating whether a vehicle continued driving after the potential crash event.

In some embodiments, the crash detection model 302 can also obtain vehicle sensor data 310 generated by one or more vehicle sensors before, during, and/or after a potential crash event. For example, the user device may communicate with the vehicle via Bluetooth, another wireless networking connection, or a wired connection to obtain data from one or more vehicle sensors such as a vehicle speed sensor. The vehicle sensor data 310 may be used by the crash detection model 302 to improve the detection and/or verification of a potential crash event.

Based on the historical driving data 304 for a user, as well as the initial device sensor data 306, the additional device sensor data 308, and/or the vehicle sensor data 310 for a potential crash event, the crash detection model engine 320 may generate crash event data 312 for the potential crash event. The crash event data 312 may include one or more classifications for the potential crash event and/or a confidence that the potential crash event is a true-positive crash detection. The crash event data 312 may include crash data surrounding the potential crash event. For example, the crash event data 312 can include all or a subset of the initial device sensor data 306, the additional device sensor data 308, and/or the vehicle sensor data 310. This crash data may include additional sensor data, a driver score for the user, etc. The crash event data 312 may be transmitted to a backend server system for further verification and evaluation. For example, a backend server system may further analyze the crash event data 312 using one or more enhanced crash detection and/or evaluation models to verify that the potential crash event was an actual crash event, to determine a severity of the crash event, or the like. In other examples, the crash event data 312 may be sent to the user on the user device for verification from the user. The crash event data 312 may be sent to a crash detection management server system or another service provider such as an automobile insurance provider. Many other uses for the crash event data may be considered, such as seeking medical aid to a user or transmitting location data to first responders.

In some embodiments, the crash detection model 302 may include one or more computational models, including predictive models, machine learning (ML) models, tree models, frequency models, physics-based models, neural networks, and hybrid combinations of these models. As one example, the crash detection model 302 may be a physics-based model that can use device sensor data to determine physical parameters (e.g., forces, accelerations, rotations) to detect a potential crash event based on one or more of the determined physical parameters exceeding and/or falling below a threshold. As another example, the crash detection model 302 may be a neural network trained to detect crash events and/or verify a potential crash event as an actual crash event. The neural network may be trained (e.g., via supervised learning) using verified crash events and historical driving data for the drivers associated with each verified crash event.

The driving abilities of a driver (e.g., as determined from historical driving data) may be correlated with the intrinsic risk that the driver will be involved in an accident during a given drive. For example, the intrinsic risk associated with a driver may be determined based on the frequency with which the driver performs unsafe driving maneuvers. Better drivers, or those who tend to drive more safely by avoiding unsafe driving maneuvers, are generally less likely to be involved in accidents than more risky drivers, or those who perform unsafe driving maneuvers more frequently. Since better drivers are less likely to be involved in accidents, the likelihood that a potential crash event detected from a collection of vehicle movements is an actual crash event is lower for better drivers than for worse, or riskier, drivers. Accordingly, considering data from previous drives indicative of a user's driving abilities, such as the historical driving data 304, when determining whether a crash occurred during a current drive, can improve the precision and recall with which the crash detection model 302 detects actual crash events.

For example, based on a determination that the historical driving data 304 indicates that a driver is a good driver, a set of features extracted from the initial device sensor data 306 and/or the additional device sensor data 308 indicative of a potential crash may be classified by the crash detection model 302 as a false-positive crash detection because it is generally less likely that the good driver will be involved in an accident. On the other hand, given the same set of features for a bad driver, the potential crash may be classified by the crash detection model 302 as a true-positive crash detection because it is generally more likely that the bad driver will be involved in an accident.

As described further below, the crash detection model 302 may consider the historical driving data 304 when determining whether a crash occurred by applying one or more models, rules, threshold, or criteria to the initial device sensor data 306 and the additional device sensor data 308 based on the historical driving data 304. For example, based on the historical driving data 304, the crash detection model 302 may determine whether the user is a good driver or a bad driver. Based on the determination of whether the user is a good driver or a bad driver, the crash detection model 302 may apply a set of rules, thresholds, and/or criteria to the initial device sensor data 306 and the additional device sensor data 308 that are predefined for good or bad drivers. For example, a first set of rules, thresholds, and/or criteria predefined for good drivers may include more stringent requirements for determining that a potential crash event is an actual crash event compared to another sets of rules, thresholds, and/or criteria predefined for worse drivers. In this way, the crash detection model 302 may classify fewer potential crash events as actual crash events for better drivers than for worse drivers, thereby reducing false-positive crash determinations for better drivers while still maintaining the same level of precision when detecting true-positive crashes for worse drivers.

In some embodiments, the rules, thresholds, and/or criteria applied by the crash detection model 302 may include one or more machine learning classifiers. The machine learning classifiers may be trained on verified crash data for previously detected crash events, as described further below. For example, the verified crash data may be separated into groups of verified crash data according to the driving abilities of the drivers to which each detected crash event is attributed. Each group may then be used to train separate machine learning classifiers that can be selected by the crash detection model 302 based on the driving ability of a current driver (e.g., as indicated by the historical driving data 304). Additionally, or alternatively, a single machine learning classifier may be trained on verified crash data for drivers of all abilities. Once trained, the single machine learning classifier may classify detected crash events using both sensor data from the detected crash event as well as historical driving data for a driver as inputs.

In some embodiments, crash detection model engine 320 may create models such as crash detection model 302. Crash detection model engine 320 may generate crash detection model 302 from verified crash data. Verified crash data can include crash data for previously detected crash events. Previously detected crash events can include driving events that a crash detection model has identified as a suspected crash based on sensor data before, during, and after the driving event. Crash data can include the device sensor measurements collected before, during, and after a suspected crash event. The crash data may also include background information regarding the previously detected potential crashes such as the speed of the vehicle before, during, and after the potential crash, or lateral and/or longitudinal accelerations/decelerations before, during, and after the potential crash. The crash data may also include other contextual information such as mobile phone use leading up to the detected potential crash, weather, time of day, traffic information, or anything else that could be relevant to causing a crash. The crash data for a previously detected crash event may also include an indication that the detected crash event has been confirmed as a true-positive or false-positive crash detection event. For example, after identifying the suspected crash based on sensor data, confirmation from a user involved in the crash or an insurance adjuster may be used to verify whether the detected crash event was a true-positive crash detection or a false-positive crash detection.

Verified crash data can further include historical driving data for each user associated with a previously detected crash event. As described above in reference to the historical driving data 304, the historical driving data for verified crash data can include raw data and processed data collected during a plurality of drives. The historical driving data for each respective user associated with a previously detected crash event can indicate a risk category for the respective user. For example, based on the number and/or frequency of unsafe driving events in the historical driving data for a user, one or more scores for the user may be determined. The one or more scores may indicate the overall risk category for a driver. Based on the risk category of a driver, their crash data can be grouped with other drivers with similar driving patterns. For example, a user may be grouped based on whether the user is determined to be a good, bad, or average driver. The crash data for each user may be stored based on the categorization of the user. For example, if a user is determined to be a good driver, then user information, driving data for the user, and background information related to previously detected potential crashes, including data regarding the verification of the potential crash, may be stored as risk category A crash data 322. Similarly, data regarding a user that is determined to be average may be stored under risk category B crash data 324. Similarly, data regarding a user that is determined to be bad may be stored under risk category C crash data 326. While described as three categories, fewer or more groupings can be envisioned or defined based on the various factors that contribute to a driver's likelihood of being involved in an accident.

In some embodiments, the risk category for a driver is provided to the crash detection model engine 320. For example, a process operating on a user device or backend server may evaluate driving data as it occurs in order to maintain up-to-date scores for a driver. The scores for the driver may then be provided to the crash detection model engine 320. Additionally, or alternatively, the crash detection model engine 320 may determine the driver scores for each user based on the crash data and historical driving data for a user and group the users into categories.

In some embodiments, the crash detection model engine 320 may generate various crash detection models, such as crash detection model 302 based on the various risk categories. For example, the risk category A crash data 322 may be used to generate a crash detection model 302 for good drivers. Similarly, the risk category B crash data 324 may be used to generate a crash detection model 302 for average drivers. As another example, the risk category C crash data 326 may be used to generate a crash detection model 302 for bad drivers. As described above, crash detection models generated for separate risk categories may include different rules, criteria, and/or thresholds that are applied based on a previously determined risk category for a current driver. Additionally, or alternatively, crash detection models generated for separate risk categories may include different weights that are applied to the features extracted from sensor data and/or historical data for input into a machine learning model. In some embodiments, the crash detection model engine 320 generates a crash detection model 302 that considers the risk category of a user and/or the user's historical driving data as an input in detecting a crash event. For example, a single crash detection model may take, as input, sensor data associated with a suspected crash event as well as historical driving data and/or one or more driver scores for a user to determine whether the suspected crash event was an actual crash event.

In some embodiments, the crash detection model engine 320 may generate a crash detection model 302 that verifies detected crash events using thresholds that vary based on risk. For example, separate thresholds may be made for a risk category A based on the risk category A crash data 322, a risk category B based on the risk category B crash data 324, etc. If a user is determined to be a good driver based on previous driving data, then in subsequent drives, the threshold for detecting a potential crash will be higher than for a user that is determined to be a bad or average driver. The threshold may apply to specific driving events. For example, the crash detection model may receive sensor data indicating that a driver has suddenly decelerated. If the driver, based on the driver score of the user, is a good driver, then the rate or severity at which the driver suddenly decelerated must be greater for a determination of a crash event. Additionally, or alternatively, the threshold may apply to a group of driving events. For example, if a driver rapidly accelerates and then suddenly decelerates, the crash detection model 302 may compare the severity of each or both events to a threshold based on the driver score of the user.

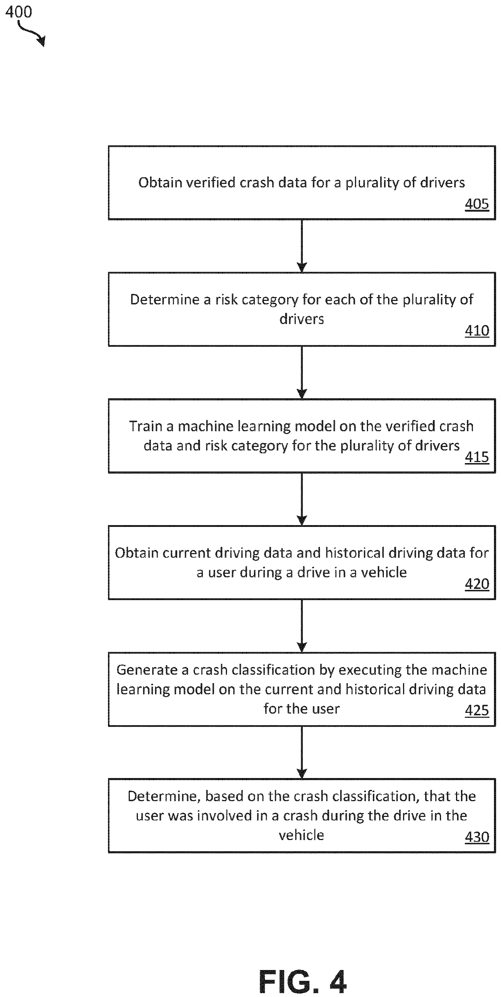

FIG. 4 is a flow diagram illustrating a process 400 for training and executing a crash detection model according to some embodiments. The process 400 may be performed by the user device. The process 400 may be performed by one or more components of a system including a crash detection management server system, one or more user devices, one or more vehicles, and/or third-party server system, which may be examples of similarly named components described herein. The process 400 is illustrated as a logical flow diagram, each operation of which represents a sequence of operations that can be implemented in hardware, computer instructions, or a combination thereof. In the context of computer instructions, the operations represent computer-executable instructions stored on one or more non-transitory computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be omitted or combined in any order and/or in parallel to implement the processes.

Some or all of the process 400 may be performed under the control of one or more computer systems configured with executable instructions and may be implemented as code (e.g., executable instructions, one or more computer programs, or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory.

The process 400 may begin at block 405 by obtaining verified crash data for a plurality of drivers. The verified crash data may be/include crash data for previously detected crash events. Crash data can include raw and/or processed device sensor measurements collected before, during, and after a suspected crash event. The crash data may also include background information regarding the previously detected potential crashes and may include other contextual information such as mobile phone use leading up to the detected potential crash, or anything else that could be relevant to causing a crash. The verified crash data for a previously detected crash event may also include an indication that the detected crash event has been confirmed as a true-positive or false-positive crash detection event. The verified crash data can further include historical driving data for each of the plurality of drivers associated with a previously detected crash event including driver scores for each user.

The plurality of drivers may include all drivers associated with user accounts maintained by a crash detection management server system, as described above. The plurality of drivers may be a subsect of all drivers such as drivers with related crash data detected during a predefined amount of time, such as the last week, the last month, the last quarter, or the like. The plurality of drivers may be drivers in a select category, such as drivers with a driver score above or below a defined threshold. The plurality of drivers may be selected based on a parameter such as drivers who have been involved in a crash event that has been confirmed as a true-positive.

A crash detection management server system, as described above, may obtain the verified crash data from user devices associated with each of the plurality of drivers. For example, after detecting a potential crash event, a user device associated with a driver may transmit an indication of the potential crash event and/or the data used to detect the potential crash event to a crash detection management server system. The user device and/or crash detection management server system may then prompt the user to confirm whether the potential crash event was an actual crash event or a false-positive crash event. After receiving conformation from the user, the crash detection management server system may then store the crash data and the confirmation with other historical driving data for the user.

At block 410, a risk category is determined for each driver of the plurality of drivers. A risk category may be a label, rating, grade, assessment, or the like that can be used to indicate the overall driving abilities of a driver and/or the intrinsic risk or likelihood that a driver will be involved in a crash during any given drive. For example, risk categories may be defined for separate groups of drivers who are determined to be good drivers based on previous driving data. The risk category for each driver may be determined by the crash detection management server system. The risk category for each driver may be determined from the verified crash data for each driver (e.g., the data for a detected crash and the historical driving data for the involved driver). The risk category for a particular driver may be determined by evaluating the frequency with which the driver performs unsafe driving maneuvers (e.g., from the number of unsafe driving events included in the driver's historical driving data). For example, one or more scores may be generated for a driver based on the number of times the driver performs one or more types of unsafe driving events during each of a previous number of drives. The one or more scores may then be aggregated to represent an overall score for the user, representing the user's risk category.

At block 415, a machine learning model is trained on the verified crash data and the risk categories for each of the plurality of drivers. The machine learning model may be trained to classify detected crash events as true-positive or false-positive crash detections. A true-positive crash detection may be a crash event detected as a result of an actual crash event. A false-positive crash detection may be a crash event detected as a result of movement of a vehicle that is consistent with movements of vehicles during actual crashes but was not caused as a result of an actual crash event. The machine learning model may be trained to output one or more types of classifications. For example, the machine learning model may be trained to output a binary classification indicating whether a detected crash event was or was not as a result of an actual crash. As another example, the machine learning model may be trained to output one or more confidence values representing a confidence or likelihood that a detected crash event was as a result of an actual crash.

In some embodiments, a single machine learning model is trained on the verified crash data and risk categories for each of the plurality of drivers. Additionally, or alternatively, separate machine learning models may be trained on verified crash data for each different risk category. For example, a first machine learning model may be trained on verified crash data for good drivers, and a second machine learning model may be trained on verified crash data for bad drivers. Once trained, the one or more machine learning models may take, as input, data for a potential crash event involving a driver and other data indicative of the driver's risk category, as described further herein, and output a classification for the potential crash event.

The data set and classification are transmitted to a crash detection model. The data set and classification may include the determination of whether the user is determined to be, for example, a good, bad, or average driver. The data set may also include additional user information and driving data. The driving data may include data before, during, and after a previously detected potential crash. The driving data may also include background information regarding the previously detected potential crashes such as the severity of speeding, severity of hard brakes, etc. during, before, and after the potential crash. The driving data may be training data and may include vehicle motion data collected by a mobile phone before, during, and/or after a crash and respective historical driving data for a user of the mobile phone. The driving data may also include other contextual information such as mobile phone use leading up to the detected potential crash, weather, time of day, traffic information, or anything else that could be relevant to causing a crash.

At block 420, current driving data and historical driving data are obtained for a user during a drive in a vehicle. As described further herein, the current driving data may include raw and/or processed data collected by one or more sensors of a user device disposed within a vehicle, and/or one or more sensors of the vehicle. The current driving data may include initial device sensor data generated by device sensors in a time frame prior to a potential crash event. For example, the data may include device sensor data from an accelerometer, gyroscope, magnetometer, and/or GPS of a mobile phone. A potential crash event may be detected by comparing the raw and/or processed data with one or more crash detection threshold criteria. A potential crash event may be detected in response to determining that the data exceeds the one or more crash detection threshold criteria. For example, a potential crash may be detected in response to determining that a vehicle decelerated above a predefined threshold deceleration rate. If a potential crash is indicated by the initial device sensor data, additional device sensor data may be collected. The additional device sensor data may be data generated by device sensors in an additional time frame during and/or after the potential crash event. For example, after identifying the potential crash event, device sensor data can continue to be obtained and/or recorded for a predefined period of time after the potential crash event as the additional device sensor data. In some embodiments, the current driving data further includes vehicle sensor data received from the vehicle, as described above.

As discussed above, historical driving data includes the raw and/or processed sensor data from every detected drive during which the user was actively driving a vehicle. Additionally, or alternatively, the historical driving data can include the raw and/or processed sensor data from a subset of the detected drives. For example, the historical driving data may include data for all drives that occurred during a predefined amount of time, such as the last week, the last month, the last quarter, or the like. The historical driving data may further include one or more historical driving scores. The one or more driver scores may include evaluations of a user's current and/or historic driving abilities from the user's historic raw and/or processed sensor data. The one or more driver scores may represent an overall evaluation of the user's driving abilities and/or individual evaluations for one or more driving behaviors or tendencies. The one or more driver scores may indicate a user's abilities and/or risk as a driver.

At block 425, a crash classification is generated by executing the machine learning model on the current and historical driving data for the user. As described above, the current driving data may include data for a potential crash event. As further described above, the historical driving data for the user may include one or more indications of the user's driving abilities and/or risk. For example, the historical driving data may include records of the number and/or frequency of unsafe driving maneuvers performed by the user during one or more prior drives. As another example, the historical driving data may include one or more scores for the user based on the tendencies of the driver to perform unsafe driving maneuvers. Based on the current driving data associated with a potential crash event and the historical driving data for the user, the machine learning model may output a classification for the potential crash event indicating the likelihood that the potential crash event was an actual crash event. In some embodiments, the machine learning model is executed by the same device used to collect the current driving data and/or detect the potential crash event. For example, in response to detecting a potential crash event, an application executing on a mobile phone may execute the machine learning model to generate a classification for the potential crash event.

Additionally, or alternatively, the mobile device may transmit the current driving data (e.g., including an indication of the potential crash event) to a backend server system for execution of the machine learning model. As described further above, the backend server system may maintain one or more records for the user, including the user's historical driving data. Additionally, or alternatively, the mobile phone may transmit an indication of the user's historical driving data, such as one or more historical driver scores, to the backend server system. Based on the current driving data from the mobile phone and the historical driving data, the backend server system may generate a classification for the potential crash event.

At block 430, it is determined that the user was involved in a crash during the drive in the vehicle based on the crash classification. For example, a binary crash classification may indicate that the potential crash event was an actual crash event. As another example, it may be determined that a confidence value for the crash classification exceeds a predefined confidence threshold. In some embodiments, determining that the user was involved in a crash may include outputting one or more requests to the user to verify the crash classification. For example, in response to determining that the crash classification indicates that a crash occurred, a push notification may be transmitted to the user device requesting confirmation or denial that the user was just involved in a crash.

It should be appreciated that the specific steps illustrated in FIG. 4 provide a particular method for training and executing a crash detection model according to some embodiments of the present invention. Other sequences of steps may also be performed according to alternative embodiments. For example, alternative embodiments of the present invention may perform the steps outlined above in a different order. Moreover, the individual steps illustrated in FIG. 4 may include multiple sub-steps that may be performed in various sequences as appropriate to the individual step. Furthermore, additional steps may be added or removed depending on the particular applications. One of ordinary skill in the art would recognize many variations, modifications, and alternatives.

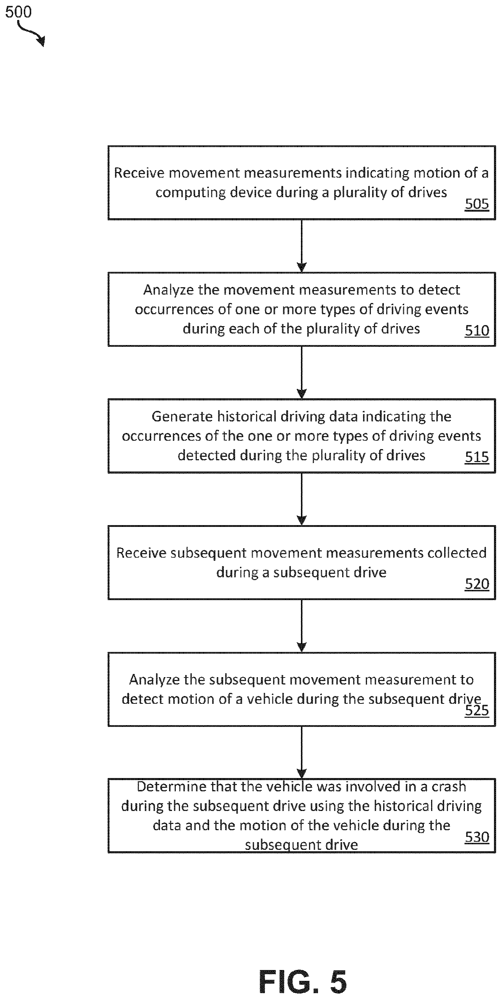

FIG. 5 is a flow diagram of an example process 500 for detecting a crash using current and historical driving data, according to some embodiments. The process 500 may be implemented on a user device, such as user device 204, as part of an application executing on the user device to detect crash events involving a vehicle in which the user device is disposed. Additionally, or alternatively, the process 500 may be implemented on a backend server system, such as the backend server system 202 described above. In some embodiments, the process 500 and associated application may be executed on a vehicle, such as vehicle 206 as described above. Additionally, or alternatively, one or more computations, processes, and/or analyses performed by process 500 may be distributed across a user device, a vehicle, and a backend server. The process 500 may be implemented by a crash detection model, such as crash detection model 302 described above.

The process 500 may begin at block 505 with movement measurements indicating motion of a mobile phone during a plurality of drives being received. The movement measurements may be raw and/or processed sensor data collected by a sensor arrangement of a user device during one or more prior drives during which the user was actively driving a vehicle, as described above in relation to historical driving data. The movement measurement may be sensor data from every detected drive or may include data from a predefined number of most recent drives. In some embodiments, the movement measurements further include raw and/or processed sensor data collected by one or more sensors of the vehicle involved in a respective drive of the plurality of drives. The movement measurements may be received by an application executing on the mobile phone. Additionally, or alternatively, the movement measurements may be received by one or more processes executing on a crash detection management server system, as described above. The movement measurements may be received from one or more sensors of the mobile phone and/or one or more sensors of the vehicle involved in each of the plurality of drives. Additionally, or alternatively, processed movement measurements may be received from an application or process executing on the mobile phone and/or vehicle that converts raw sensor data into vehicle dynamics information (e.g., speed, location, orientation, lateral/longitudinal acceleration forces, etc.).

At block 510, the movement measurements are analyzed to detect occurrences of one or more types of driving events during each of the plurality of drives. Raw and/or processed sensor data may be used to detect the occurrences of the one or more types of driving events during each drive. Each type of driving event may be a detectable driving maneuver, or action, performed by a driver while driving a vehicle. As described above, the one or more types of driving events can include safe and/or unsafe driving events. For example, the one or more types of driving events can include hard braking events, harsh acceleration events, swerving, aggressive driving events, hard cornering events, distracted driving events, or the like. An identified instance of a driving event can include information about the type of driving event, a severity of the driving event, a time and location where the driving event occurred, road type or the like.

At block 515, historical driving data indicating the occurrences of the one or more types of driving events detected during the plurality of drives is generated. The historical driving data for a user may include one or more historical driver scores. The one or more driver scores may include evaluations of a user's current and/or historic driving abilities from the user's historic raw and/or processed sensor data. The one or more driver scores may represent an overall evaluation of the user's driving abilities and/or individual evaluations for one or more driving behaviors or tendencies. For example, based on processed sensor data from previous drives, a scoring engine may assess the prevalence of unsafe driving events (e.g., hard braking, distracted driving, etc.) during the previous drives. Based on the prevalence, an overall score for each drive, and/or an overall score for the user based on the scores for each drive may be determined. A driver score may be based on the occurrences of one or more types of driving events detected during a number of drives. The driver score may further be determined by aggregating a subset of the drive scores from a number of most recent drives. Additionally, event scores may be determined. An event score may be based on each type of the one or more types of driving events, a number of occurrences of each type detected during the respective drive, and/or aggregating the event score for each type of the one or more types of driving events.

At block 520, subsequent movement measurements collected during a subsequent drive are received. The subsequent movement measurements may be raw and/or processed sensor data collected by one or more sensors of a user device and/or vehicle during a subsequent drive. For example, the subsequent movement measurements may include accelerometer, gyroscope, magnetometer, and/or GNSS measurements collected by one or more sensors of a user device during the subsequent drive. In some embodiments, the subsequent drive is a current drive of the user where the user device and the user are in the vehicle during the current drive. An application executing on the user device may receive the subsequent movement measurements.

At block 525, the subsequent movement measurements are analyzed to detect motion of a vehicle during the subsequent drive. An application executing on the user device may monitor the subsequent movement measurements to detect the motion of the vehicle. The detected motion of the vehicle may include the vehicle's speed, lateral and longitudinal accelerations, orientation, location, or the like. In some embodiments, the application analyzes the subsequent movement measurements to detect one or more measurements indicative of potential crash events. Additionally, or alternatively, another component executing on the user device may monitor device sensor data to detect measurements indicative of a potential crash event and provide an indication of the potential crash event to the application. Measurements indicative of a potential crash event may include raw and/or processed sensor data that exceeds one or more predefined threshold criteria. For example, large spikes in raw accelerometer data and/or extreme changes in a vehicle's estimated speed may indicate that the vehicle experienced a sudden deceleration consistent with a collision. As another example, rapid changes in vehicle orientation may indicate that the vehicle spun around in manner consistent with a collision. An indication of a potential crash event may include raw and/or processed sensor data collected in a time frame leading up to, including, and/or after the time of a potential crash event. For example, the subsequent movement measurements may be collected and/or generated within 5 seconds, 30 seconds, 1 minute, 5 minutes, or another suitable period of time before and/or after a potential crash event. In some embodiments, the subsequent movement measurements are received in response to detecting the potential crash event from all or a subset of the subsequent movement measurements.

At block 530, it is determined that the vehicle was involved in a crash during the subsequent drive using the historical driving data and the movement measurements of the vehicle during the subsequent drive. Determining that the vehicle was involved in a crash may include executing a machine learning model on the historical data and the motion of the vehicle during the subsequent drive to produce a crash classification. For example, an overall score for the driver (e.g., as determined in block 515) and movement measurements collected around a potential crash event may be provided as features to a trained machine learning model to produce a classification for the potential crash. As described above, the crash classification may be a probability, confidence, or other evaluation of whether the potential crash event is a true-positive crash detection or a false-positive crash detection. The machine learning model may be trained to produce crash classifications from sets of training data, as described above in reference to FIG. 4. For example, the machine learning model may be trained on sets of data that include vehicle motion data collected by another mobile phone that was used to detect a crash event, an indication of whether the detected crash event was a false-positive or true-positive crash event, and historical driving data for the user of the other mobile phone. Because safer drivers (e.g., as indicated by their historical driving data) are less likely to be involved in vehicle accidents than less safe drivers, training the machine learning model on verified crash data and historical driving data can result in a machine learning model that reduces false-positive crash detections for better drivers (i.e., reducing recall) while ensuring that true-positive crash detections for worse drivers (i.e., precision) is maintained.

It should be appreciated that the specific steps illustrated in FIG. 5 provide a particular method detecting a crash using current and historical driving data according to some embodiments of the present invention. Other sequences of steps may also be performed according to alternative embodiments. For example, alternative embodiments of the present invention may perform the steps outlined above in a different order. Moreover, the individual steps illustrated in FIG. 5 may include multiple sub-steps that may be performed in various sequences as appropriate to the individual step. Furthermore, additional steps may be added or removed depending on the particular applications. One of ordinary skill in the art would recognize many variations, modifications, and alternatives.

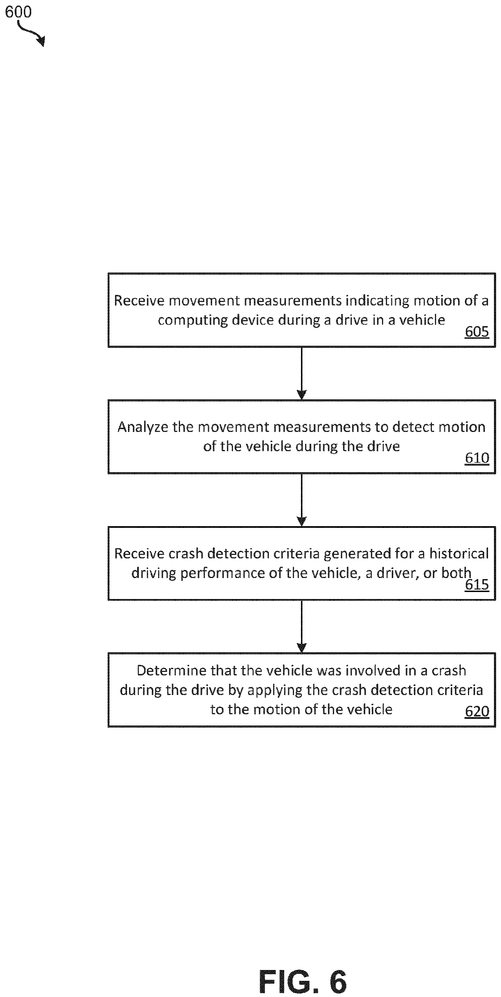

FIG. 6 is a flow diagram of another example process 600 for detecting a crash using current and historical driving data, according to some embodiments. The process 600 may be implemented on a user device, such as user device 204, as part of an application executing on the user device to detect crash events involving a vehicle in which the user device is disposed. Additionally, or alternatively, the process 600 may be implemented on a backend server system, such as the backend server system 202 described above. In some embodiments, the process 600 and associated application may be executed on a vehicle, such as vehicle 206 as described above. Additionally, or alternatively, one or more computations, processes, and/or analyses performed by process 600 may be distributed across a user device, a vehicle, and a backend server. The process 600 may be implemented by a crash detection model, such as crash detection model 302 described above.

The process 600 may begin at block 605 with movement measurements indicating motion of a computing device during a drive in a vehicle being received. The movement measurements may be raw and/or processed sensor data collected by a sensor arrangement of the computing device during a drive in the vehicle. Additionally, or alternatively, the movement measurements may be collected and/or processed by a sensor arrangement coupled to the computing device. For example, the movement measurements may be collected by one or more integrated sensors within the computing device and/or one or more sensors of a sensor tag, a dashcam system, or the like installed in the vehicle, and transmitted to the computing device via one or more wired and/or wireless connections. In some embodiments, the movement measurements further include raw and/or processed sensor data collected by one or more sensors of the vehicle. The movement measurements may be received by an application executing on the computing device. Additionally, or alternatively, the movement measurements may be received by one or more processes executing on a crash detection management server system, as described above. The movement measurements may be received from one or more sensors coupled to the computing device and/or one or more sensors of the vehicle. Additionally, or alternatively, processed movement measurements may be received from an application or process executing on the computing device and/or vehicle that converts raw sensor data into vehicle dynamics information (e.g., speed, location, orientation, lateral/longitudinal acceleration forces, etc.).

At block 610, the movement measurements are analyzed to detect motion of the vehicle during the drive. An application executing on the computing device may monitor the movement measurements to detect the motion of the vehicle. The detected motion of the vehicle may include the vehicle's speed, lateral and longitudinal accelerations, orientation, location, or the like. In some embodiments, the application analyzes the movement measurements to detect one or more measurements indicative of potential crash events. Additionally, or alternatively, another component executing on the user device may monitor device sensor data to detect measurements indicative of a potential crash event and provide an indication of the potential crash event to the application. Measurements indicative of a potential crash event may include raw and/or processed sensor data that exceeds one or more predefined threshold criteria. For example, large spikes in raw accelerometer data and/or extreme changes in a vehicle's estimated speed may indicate that the vehicle experienced a sudden deceleration consistent with a collision. As another example, rapid changes in vehicle orientation may indicate that the vehicle spun around in manner consistent with a collision. An indication of a potential crash event may include raw and/or processed sensor data collected in a time frame leading up to, including, and/or after the time of a potential crash event. For example, the movement measurements may be collected and/or generated within 5 seconds, 30 seconds, 1 minute, 5 minutes, or another suitable period of time before and/or after a potential crash event. In some embodiments, the subsequent movement measurements are received in response to detecting the potential crash event from all or a subset of the subsequent movement measurements.

Additionally, or alternatively, the movement measurements may be analyzed to detect occurrences of one or more types of driving events during the drive. Raw and/or processed sensor data may be used to detect the occurrences of the one or more types of driving events during the drive. Each type of driving event may be a detectable driving maneuver, or action, performed by a driver while driving a vehicle. As described above, the one or more types of driving events can include safe and/or unsafe driving events. For example, the one or more types of driving events can include hard braking events, harsh acceleration events, swerving, aggressive driving events, hard cornering events, distracted driving events, or the like. An identified instance of a driving event can include information about the type of driving event, a severity of the driving event, a time and location where the driving event occurred, road type or the like.

At block 615, crash detection criteria generated for a historical driving performance of the vehicle, a driver associated with the computing device, or both, are received. The historical driving performance of the vehicle and/or the driver may include one or more historical driving scores. The one or more driving scores may include evaluations of a user's current and/or historic driving abilities from the user's historic raw and/or processed sensor data. The one or more driving scores may represent an overall evaluation of the user's driving abilities and/or individual evaluations for one or more driving behaviors or tendencies. For example, based on processed sensor data from previous drives, a scoring engine may assess the prevalence of unsafe driving events (e.g., hard braking, distracted driving, etc.) during previous drives. Based on the prevalence, an overall score for each drive, and/or an overall score for the user based on the scores for each drive may be determined. A driving score may be based on the occurrences of one or more types of driving events detected during a number of drives. The driving score may further be determined by aggregating a subset of the driving scores from a number of most recent drives. Additionally, event scores may be determined. An event score may be based on each type of the one or more types of driving events, a number of occurrences of each type detected during the respective drive, and/or aggregating the event score for each type of the one or more types of driving events.

The crash detection criteria may include one or more computational models, including predictive models, machine learning (ML) models, tree models, frequency models, physics-based models, neural networks, and hybrid combinations of these models, as described above in relation to crash detection model 302. The one or more computational models may be trained to classify detected crash events as true-positive or false-positive crash detections. In some embodiments, a single machine learning model is trained on verified crash data and historical driving performances for each of a plurality of vehicles and/or drivers, including a subset of verified crash data for vehicles and/or drivers having a same or similar historical driving performance as the vehicle and/or driver involved in the drive under analysis. Additionally, or alternatively, separate machine learning models may be trained on verified crash data for each different risk category of historical driving performances. For example, a first machine learning model may be trained on verified crash data for good drivers, and a second machine learning model may be trained on verified crash data for bad drivers. Once trained, the machine learning model trained on verified crash data for the class of drivers to which the vehicle and/or user associated with the computing device belongs may be selected and transmitted to the computing device for use in detecting crashes involving the vehicle and/or user. In some embodiments, the crash detection criteria include one or more threshold criteria for detecting the occurrence of a suspected crash event. For example, the crash detection criteria may define threshold movement measurement values above or below which a suspected crash event may be identified for subsequent processing by the computing device or an external device, such as a crash detection management system.

At block 620, it is determined that the vehicle was involved in a crash during the subsequent drive by applying the crash detection criteria to the motion of the vehicle. Applying the crash detection criteria to the motion of the vehicle may include executing a trained machine learning model, or other computational model, on the movement measurements and/or processed motion of the vehicle. The machine learning model may be further executed on data indicative of the historical driving performance of the vehicle and/or the driver. Additionally, or alternatively, a particular machine learning model trained on motion data for vehicles and/or drivers with the same and/or similar historical driving performances may be selected from a plurality of models and executed on the movement measurements and/or processed motion of the vehicle. Applying the crash detection criteria to the motion of the vehicle may produce a classification for a potential crash. As described above, a crash classification may be a probability, confidence, or other evaluation of whether the potential crash event is a true-positive crash detection or a false-positive crash detection.

Additionally, or alternatively, applying the crash detection criteria to the motion of the vehicle may produce an indication of a suspected crash event. For example, the motion of the vehicle may be continuously and/or periodically (e.g., once for every .5, 1, or more seconds of data and/or once every .5, 1, 5 seconds or more for the past 1, 5, 10 or more seconds of data) compared to one or more predefined thresholds in the crash detection criteria indicative of the vehicle being involved in a crash. In response to determining that the collected data is above or a below one or more of the predefined thresholds, it may be determined that the crash detection criteria are satisfied. In response to determining that the crash detection criteria are satisfied, movement measurements around the time of the suspected crash may be further analyzed to determine whether the initial indication was a true-positive or a false-positive. For example, in response to determining that the crash detection criteria are satisfied, all, or a subset of the movement measurements, may be processed by an additional crash verification model on the computing device to generate a crash classification, as described above. Additionally, or alternatively, in response to determining that the crash detection criteria are satisfied, the computing device may transmit all, or a subset of the movement measurements, to a crash detection management server system for additional analysis to verify the occurrence of a crash.

It should be appreciated that the specific steps illustrated in FIG. 6 provide a particular method of detecting a crash using current and historical driving data according to some embodiments of the present invention. Other sequences of steps may also be performed according to alternative embodiments. For example, alternative embodiments of the present invention may perform the steps outlined above in a different order. Moreover, the individual steps illustrated in FIG. 6 may include multiple sub-steps that may be performed in various sequences as appropriate to the individual step. Furthermore, additional steps may be added or removed depending on the particular applications. One of ordinary skill in the art would recognize many variations, modifications, and alternatives.

While examples and features of disclosed principles are described herein, modifications, adaptations, and other implementations are possible without departing from the spirit and scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

It is also understood that the examples and embodiments described herein are for illustrative purposes only and that various modifications or changes in light thereof will be suggested to persons skilled in the art and are to be included within the spirit and purview of this application and scope of the appended claims, which follow.

## Claims

1. A method comprising:
receiving, by a crash detection application executing on a computing device, and from a sensor arrangement coupled to the computing device, movement measurements indicating motion of the computing device during a drive in a vehicle;
analyzing, by the crash detection application, the movement measurements to detect motion of the vehicle;
receiving, by the crash detection application, and from a crash detection management server system, crash detection criteria generated for a historical driving performance of the vehicle, of a driver associated with the computing device, or both; and
determining, by the crash detection application, that the vehicle was involved in a crash during the drive by applying the crash detection criteria to the motion of the vehicle.

2. The method of claim 1, further comprising:
receiving previous movement measurements collected by the sensor arrangement during a plurality of drives that occurred before the drive;
analyzing the previous movement measurements to detect occurrences of one or more types of driving events during each of the plurality of drives; and
generating a historical driver score based on the occurrences of the one or more types of driving events detected during the plurality of drives; and
wherein the historical driving performance comprises the historical driver score.

3. The method of claim 2, wherein generating the historical driver score comprises:
generating drive scores for each drive of the plurality of drives based on the occurrences of the one or more types of driving events detected during each drive; and
aggregating a subset of the drive scores from a predefined number of most recent drives.

4. The method of claim 3, wherein generating a drive score for a respective drive of the plurality of drives comprises:
generating an event score for each type of the one or more types of driving events based on a number of occurrences of each type detected during the respective drive; and
aggregating the event score for each type of the one or more types of driving events.

5. The method of claim 1, further comprising generating the crash detection criteria from collections of vehicle motion training data, wherein each collection of vehicle motion training data comprises vehicle motion data collected by another computing device during a crash involving a respective vehicle or a respective driver having a same historical driving performance as the historical driving performance of the vehicle, of the driver, or of both.

6. The method of claim 1, wherein the crash detection criteria include a machine learning model and determining that the vehicle was involved in the crash comprises:
executing, by the crash detection application, the machine learning model on the motion of the vehicle during the subsequent drive to produce a crash classification.

7. The method of claim 1, wherein applying the crash detection criteria to the motion of the vehicle comprises:
analyzing, by the crash detection application, the motion of the vehicle to generate one or more outputs indicative of a potential crash; and
wherein applying the crash detection criteria to the motion of the vehicle comprises comparing, by the crash detection application, the crash detection criteria with the one or more outputs.

8. The method of claim 1, wherein the crash detection criteria include a predefined crash detection threshold and determining that the vehicle was involved in the crash comprises:
analyzing, by the crash detection application, the motion of the vehicle to generate a likelihood that the vehicle was involved in the crash; and
determining, by the crash detection application, that the likelihood exceeds the predefined crash detection threshold.

9. The method of claim 1, wherein the one or more types of driving events include at least one of: hard braking events, hard acceleration events, distracted driving events, road type events, or time of day events.

10. The method of claim 1, wherein the sensor arrangement includes at least one of an accelerometer, a gyroscope, a magnetometer, a compass, a barometer, or a Global Navigation Satellite System (GNSS) receiver.

11. The method of claim 1, wherein determining that the vehicle was involved in a crash comprises determining that the crash occurred at a first time, the method further comprising:
identifying, by the crash detection application, a subset of the movement measurements that were collected by the sensor arrangement within predefined time period before the first time, after the first time, or both; and
transmitting, by the crash detection application, the subset of the movement measurements to the crash detection management server system in response to determining that the vehicle was involved in the crash.

12. The method of claim 11, wherein the crash detection criteria are first crash detection criteria and the method further comprises:
applying, by the crash detection management server system, second crash detection criteria to the subset of the movement measurements to verify the occurrence of the crash.

13. The method of claim 1, wherein the computing device is a smartphone disposed within the vehicle; or wherein the computing device is an integrated component of the vehicle.

14. A crash detection system, comprising:
a computing device, comprising:
one or more first processors; and
a first memory storing a first set of instructions which, when executed by the one or more first processors, cause the one or more first processors to perform first operations comprising:
receiving, from a sensor arrangement coupled to the computing device, movement measurements indicating motion of the computing device during a drive in a vehicle;
analyzing the movement measurements to detect motion of the vehicle;
receiving, from a crash detection management server system, first crash detection criteria generated using a historical driving performance of the vehicle, of a driver associated with the computing device, or both;
determining that the motion of the vehicle satisfies the first crash detection criteria; and
transmitting the movement measurements to the crash detection management server system in response to determining that the motion of the vehicle satisfies the first crash detection criteria; and
the crash detection management server system, comprising:
one or more second processors; and
a second memory storing a second set of instructions which, when executed by the one or more second processors, cause the one or more second processors to perform second operations comprising:
transmitting the first crash detection criteria to the computing device;
receiving the movement measurements from the computing device; and
determining that the vehicle was involved in a crash during the drive by applying second crash detection criteria to the movement measurements, the second crash detection criteria being different than the first crash detection criteria.

15. A non-transitory machine-readable storage medium, including instructions that, when executed by one or more processors of a crash detection system, cause the one or more processors to perform operations comprising:
receiving, by a crash detection application executing on a computing device, and from a sensor arrangement coupled to the computing device, movement measurements indicating motion of the computing device during a drive in a vehicle;
analyzing, by the crash detection application, the movement measurements to detect motion of the vehicle;
receiving, by the crash detection application, and from a crash detection management server system, crash detection criteria generated using a historical driving performance of the vehicle, of a driver associated with the computing device, or both; and
determining, by the crash detection application, that the vehicle was involved in a crash during the drive by applying the crash detection criteria to the motion of the vehicle.
